# EUROPEAN PATENT APPLICATION

(11) **EP 1 578 157 A1**
(43) Date of publication of application: **21.09.2005**
(21) Application number: 05101885.1
(22) Date of filing: 10.03.2005
(51) Int. Cl.: H04Q 7/32

(54) **Cellular Phone, Information Providing Site Access Method and Access Control Program**

(30) Priority: 18.03.2004 JP 2004079315
(71) Applicant: NEC CORPORATION, Tokyo (JP)
(72) Inventor: Tajima, Tomoyuki c/o NEC Saitama, Ltd., Kodama-gun Saitama (JP)
(74) Representative: Betten & Resch

(57) **Abstract**

A cellular phone includes an arrangement in which when a content is downloaded from an information providing site on the Internet, the Internet address of the information providing site is detected and stored as part of additional information of the content in correspondence with the content, so that when the Internet address of the additional information displayed on a window is selected afterward, access is made to the information providing site. An information providing site access method used for the cellular phone, and access control method are also disclosed.

## Description

### Background of the Invention

The present invention relates to a cellular phone, an information providing site access method used for the cellular phone, an access control program and, more particularly, to a cellular phone, information providing site access method used for the cellular phone, and an access control program which are suitably used for a case wherein access is to be made to an information providing site again to which access was made in the past to receive contents provided therefrom.

Conventionally, one or a plurality of kinds of standby images and ringing tones (ringing melodies) had already been set in a cellular phone when a user purchased it. Recently, many cellular phones allow users to set standby images and ringing tones by accessing information providing sites (e.g., content providing service companies) and downloading information therefrom. Since different standby images and ringing melodies are distributed from an information providing site every day, a user can make his/her cellular phone "a self-tailored cellular phone whose specifications change every day" by changing the settings every day by downloading information every day.

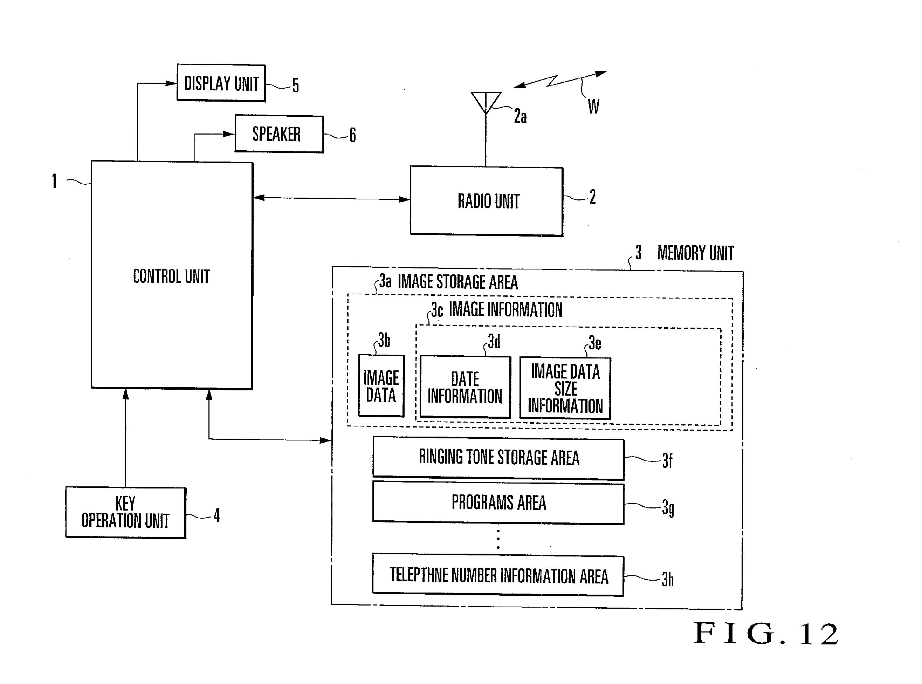

Conventionally, as shown in Fig. 12, such a type of cellular phone comprises a control unit 1, radio unit 2, antenna 2a, memory unit 3, key operation unit 4, display unit 5, and a speaker 6.

The control unit 1 controls the overall cellular phone. The radio unit 2 transmits/receives radio waves W to/from a radio base station (not shown) through the antenna 2a. The radio base station is connected to an information providing site (not shown) through the Internet. The memory unit 3 comprises, for example, a RAM (Random Access Memory) and the like, and has an image storage area 3a, ringing tone storage area 3f, programs area 3g, telephone number information area 3h, and the like. The image storage area 3a has image data 3b and image information 3c. The image information 3c comprises date information 3d and image size information 3e.

The key operation unit 4 comprises, for example, a transmission key, an alphabet/kana/kanji/numeral conversion key, a power ON/OFF key, a cross key for cursor operation, an end key, and the like. The display unit 5 comprises, for example, an LCD (Liquid Crystal Display) and the like, and displays a standby image and a window necessary for communication. The speaker 6 generates a ringing tone and a sound necessary for communication.

According to this cellular phone, when the user accesses an information providing site, a content (image) is downloaded. The downloaded image is stored in the image storage area 3a as the image data 3b, together with the image information 3c (date information 3d and image size information 3e). The image data 3b is set as a standby image by operation of the user.

In addition to the above cellular phone, the cellular phones disclosed in the following references have been available as those based on this type of technique.

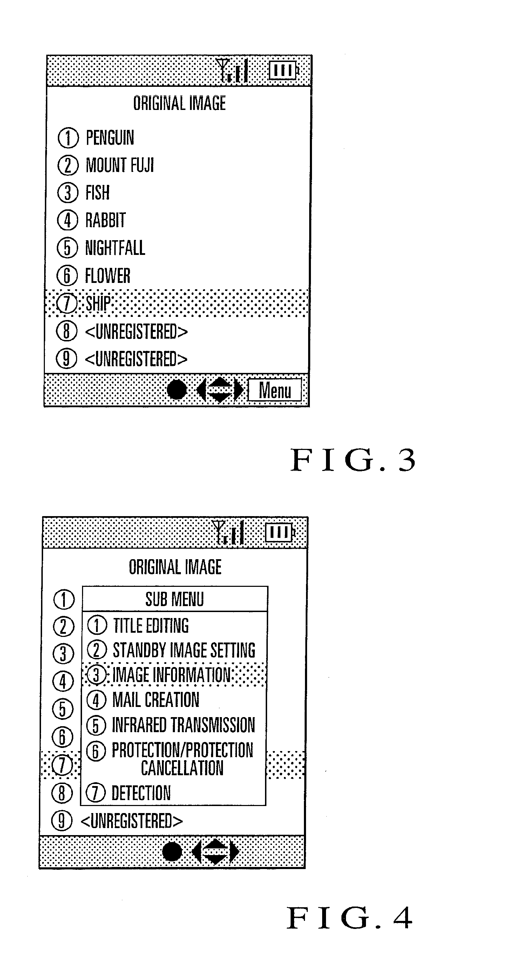

In the terminal function setting system disclosed in Japanese Patent Laid-Open No. 2003-5883 (p. 1 and Figs. 4 to 9), a menu window is freely set, and a shortcut function is provided. This allows each user to set a graphical user interface as a menu window in accordance with user's preference and application.

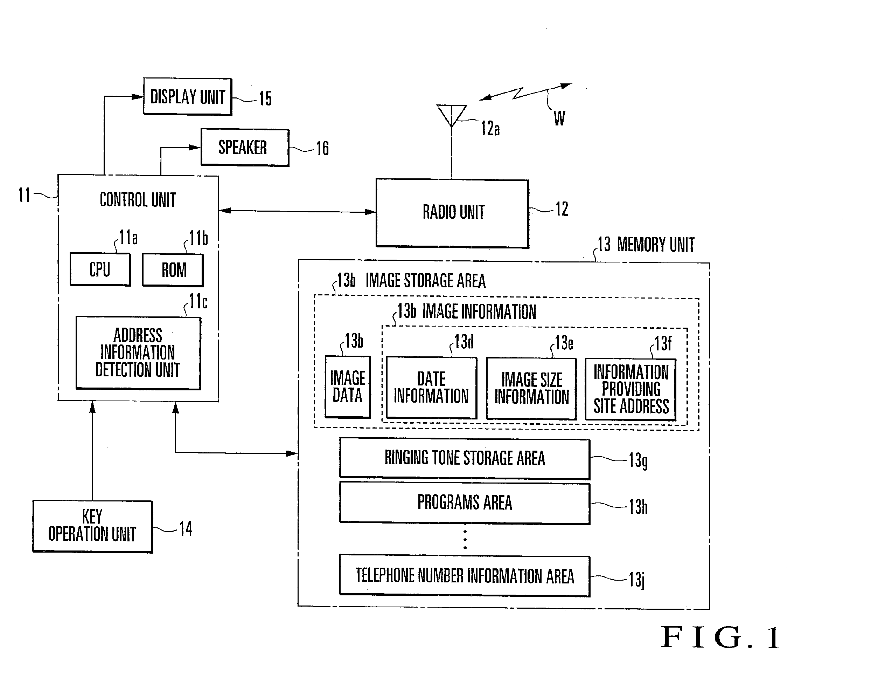

In the communication apparatus disclosed in Japanese Patent Laid-Open No. 2003-15978 (p. 1 and Figs. 1 to 7), a URL (Uniform Resource Locator) and mail address information in the image acquired by a photographing means are stored, and the user accesses a destination by using them.

The following problems, however, arise in the above conventional cellular phones.

When a user tries to access an information providing site from which a content such as a standby image or ringing tone was downloaded in the past, and tries to download a similar content, since the image information 3c obtained when downloading was executed contains only the date information 3d and image size information 3e, it is not easy to find the target information providing site, and the user may not be able to access the site. In addition, when the user makes searches, the amount of data searched increases, resulting in an increase in communication charge. In order to solve these problems, the user may register an information providing site in "favorites" or create a shortcut to access the site. Even if, however, the user creates a shortcut to the site or registers it in "favorites", he/she may forget information that can be downloaded from the registered information providing site.

In addition, the terminal function setting system disclosed in Japanese Patent Laid-Open No. 2003-5883 and the communication apparatus disclosed in Japanese Patent Laid-Open No. 2003-15978 are not designed to facilitate access to an information providing site which a user accessed in the past. Therefore, no improvement has been made in the above problems.

### Summary of the Invention

It is, therefore, a principal object of the present invention to provide a cellular phone, an information providing site access method used for the cellular phone, and an access control program which allow a user to easily access an information providing site which he/she accessed in the past to receive a content, even if the user forgets the site name and address of the information providing site when he/she tries to download the same content from the same information providing site after a lapse of several years, thereby making it possible to save unnecessary search operation.

In order to achieve the above object, according to the present invention, there is provided a cellular phone comprising an arrangement in which when a content is downloaded from an information providing site on the Internet, an Internet address of the information providing site is detected and stored as part of additional information of the content in correspondence with the content, so that when the Internet address of the additional information displayed on a window is selected afterward, access is made to the information providing site.

### Brief Description of the Drawings

Fig. 1 is a block diagram showing the electrical arrangement of the main part of a cellular phone according to the first embodiment of the present invention;
Fig. 2 is a flowchart for explaining the operation of the cellular phone in Fig. 1;
Fig. 3 is a view showing a standby image selection menu window;
Fig. 4 is a view showing a submenu selection window;
Fig. 5 is a view showing an image information selection window;
Fig. 6 is a view showing a standby image providing site;
Fig. 7 is a block diagram showing the electrical arrangement of the main part of a cellular phone according to the second embodiment of the present invention;
Fig. 8 is a view showing a ringing tone selection menu window;
Fig. 9 is a view showing a submenu selection window;
Fig. 10 is a melody information selection window;
Fig. 11 is a view showing a ringing melody providing site; and
Fig. 12 is a block diagram showing the electrical arrangement of the main part of a conventional cellular phone.

### Description of the Preferred Embodiments

The present invention can be summarized as follows. When a content is downloaded from an information providing site on the Internet, the Internet address of the information providing site is detected and stored as part of the additional information of the content in a cellular phone in correspondence with the content. When this Internet address of the additional information displayed on a window is selected, access is made to the information providing site.

### (First Embodiment)

Fig. 1 shows the electrical arrangement of the main part of a cellular phone according to the first embodiment of the present invention.

The cellular phone in this case is configured as follows. When a content is downloaded from an information providing site on the Internet, the Internet address of the information providing site is detected and stored as part of the additional information of the content in the cellular phone in correspondence with the content. When this Internet address of the additional information displayed on a window is selected, access is made to the information providing site.

More specifically, referring to Fig. 1, this cellular phone comprises a control unit 11, radio unit 12, antenna 12a, memory unit 13, key operation unit 14, display unit 15, and speaker 16.

The control unit 11 has a CPU (Central Processing Unit) 11a which controls the overall cellular phone and a ROM (Read Only Memory) 11b on which an access control program for making the CPU 11a operate is recorded. The control unit 11 is provided with an address information detection unit 11c. When a content is downloaded, the address information detection unit 11c detects the Internet address of an information providing site (not shown). In this embodiment, in particular, when a shortcut corresponding to an Internet address displayed on the display unit 15 is selected, the control unit 11 accesses the information providing site corresponding to the Internet address.

The radio unit 12 transmits/receives a radio wave W to/from a radio base station (not shown) through the antenna 12a. The radio base station is connected to an information providing site (not shown) through the Internet.

A memory unit 13 comprises, for example, a RAM and the like and has an image storage area 13a, ringing tone storage area 13g, programs area 13h, and telephone number information area 13j.

The image storage area 13a has image data 13b and image information 13c. The image information 13c comprises date information 13d, image size information 13e, and information providing site address 13f. In this embodiment, in particular, a downloaded content (image) is stored as the image data 13b, and the Internet address detected by the address information detection unit 11c is made to correspond, as part of the additional information (image information 13c) of the content (image), to the content (image) and stored as the information providing site address 13f.

The key operation unit 14 comprises, for example, a transmission key, an alphabet/kana/kanji/numeral conversion key, a power ON/OFF key, a cross key for cursor operation, an end key, and the like.

The display unit 15 comprises, for example, an LCD and the like, and displays a standby image and a window necessary for communication. In the first embodiment, in particular, the display unit 15 displays as a shortcut the additional information of the above content which includes the Internet address of the information providing site. The speaker 16 generates a ringing tone and a sound necessary for communication.

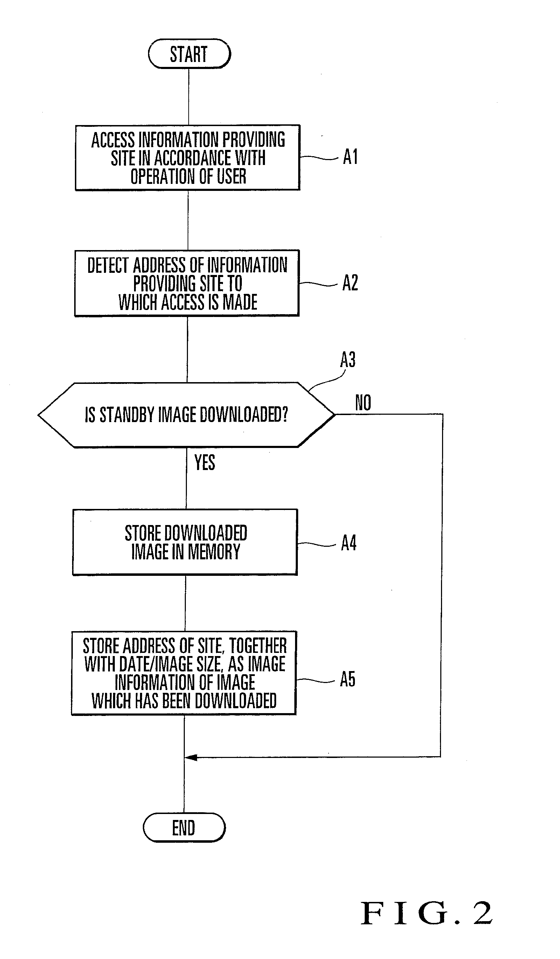

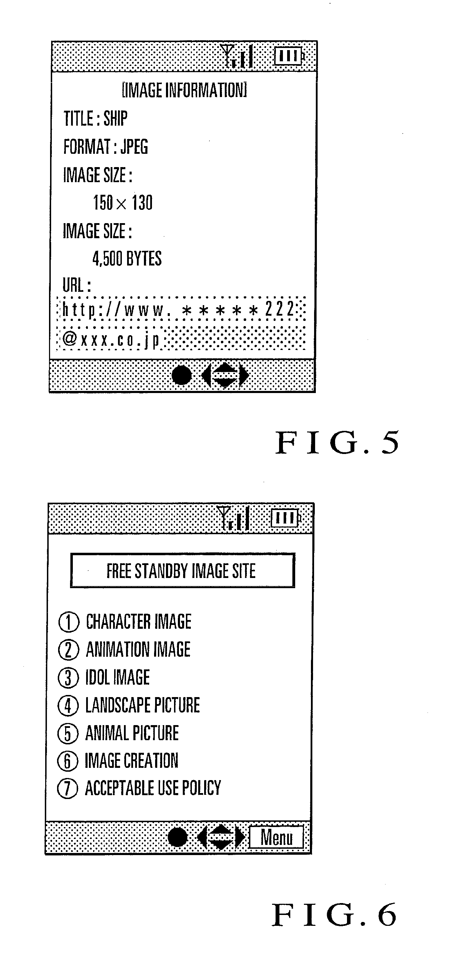

Fig. 2 is a flowchart for explaining the operation of the cellular phone in Fig. 1. Fig. 3 shows a standby image selection menu window. Fig. 4 shows a submenu selection window. Fig. 5 shows an image information selection window. Fig. 6 shows a standby image providing site.

The processing contents of an information providing site access method used for the cellular phone in this case will be described with reference to these drawings.

In this cellular phone, when a content (image) is downloaded from an information providing site, the Internet address of the information providing site is detected and stored upon being made to correspond, as part of the additional information (the image information 13c in this case) of the content, to the content. When the Internet address of the additional information displayed on a window of the display unit 15 is selected, access is made to the information providing site.

That is, access is made to the information providing site on the Internet through the radio unit 12 in accordance with operation of the user (step A1). The address information detection unit 11c detects the Internet address of the currently accessed information providing site (address detection processing in step A2). At this time, a content is downloaded by operation of the user (step A3). The downloaded standby window is stored as the image data 13b in the memory unit 13 (step A4).

In correspondence with the stored standby image, the Internet address of the information providing site is stored as the information providing site address 13f in the memory unit 13, together with the date information 13d and image size information 13e.

The stored information providing site address 13f is stored as a shortcut for accessing the information providing site afterward (storage processing in step A5).

Subsequently, as shown in Fig. 3, the standby image selection menu is opened by operation of the user, and a standby image is selected by setting the cursor to the standby image (e.g., "ship") downloaded from an information providing site in the past to which access is to be made. When the standby image is selected, the submenu of this standby image is activated and displayed on the display unit 15, as shown in Fig. 4. When "image information" in the displayed submenu is selected by operation of the user, the additional information (format and image size) of a content containing the Internet address ("URL") corresponding to the standby image ("ship") is read out from the memory unit 13 and is displayed as a shortcut on the display unit 15, as shown in Fig. 5 (display processing). When the shortcut corresponding to the displayed Internet address (URL) is selected, access is made to the information providing site corresponding to the Internet address (access processing), and "free standby image site" is displayed, as shown in, for example, Fig. 6.

As described above, in the first embodiment, when a content (image) is downloaded from an information providing site, the Internet address (URL) of the information providing site is detected and stored as part of the additional information (image information 13c) of the image in correspondence with the image. Thereafter, when a shortcut corresponding to the Internet address of the additional information displayed on a window of the display unit 15 is selected, access is made to the information providing site. Even if, therefore, the user forgets the site name and address of this information providing site when he/she tries to download the same content from the same information providing site after a lapse of several years, he/she can easily access the information providing site, which he/she accessed in the past to receive a content, by selecting the above shortcut. This makes it possible to save unnecessary search operation.

### (Second Embodiment)

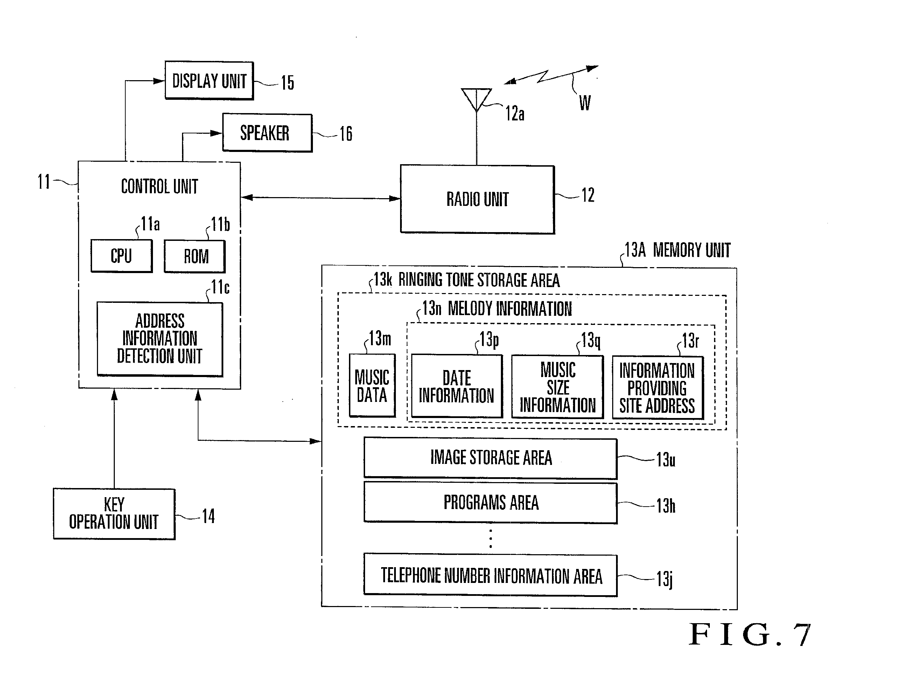

Fig. 7 shows the electrical arrangement of the main part of a cellular phone according to the second embodiment of the present invention. The same reference numerals as the second embodiment denote elements common to those in first embodiment shown in Fig. 1.

In place of the memory unit 13 shown in Fig. 1, the cellular phone in this case is equipped with a memory unit 13A having a different arrangement. The memory unit 13A has a ringing tone storage area 13k, image storage area 13u, programs area 13h, telephone number information area 13j, and the like.

The ringing tone storage area 13k has music data 13m and melody information 13n. The melody information 13n comprises date information 13p, music size information 13q, and information providing site address 13r. In this embodiment, in particular, a downloaded content (ringing tone) is stored as the music data 13m, and the Internet address detected by the address information detection unit 11c is made, as part of the additional information (melody information 13n) of the content (ringing tone), to correspond to the content (ringing tone), and is stored as the information providing site address 13r. The arrangement of this embodiment is the same as that shown in Fig. 1 except for this.

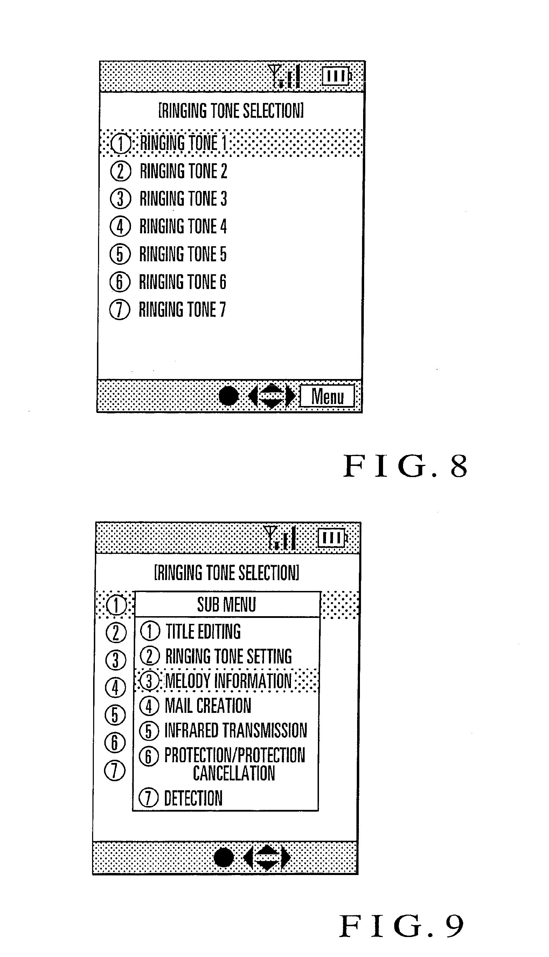

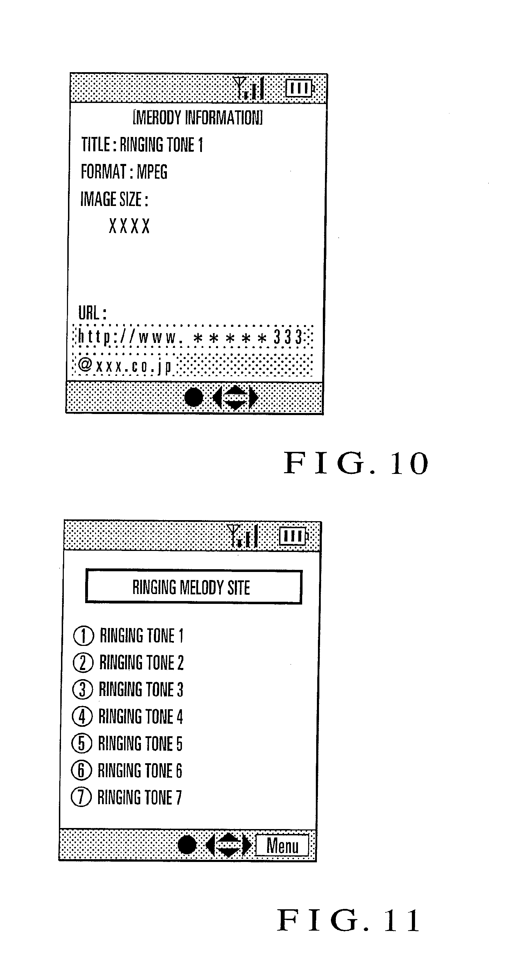

Fig. 8 shows a ringing tone selection menu window. Fig. 9 shows a submenu selection window. Fig. 10 is a melody information selection window. Fig. 11 shows a ringing melody providing site.

The processing contents of an information providing site access method used for the cellular phone in this case will be described with reference to these drawings.

In this cellular phone, when a content (ringing tone) is downloaded from an information providing site, the Internet address of the information providing site is detected and is stored as part of the additional information (the melody information 13n in this embodiment) of the content in correspondence with the content. When the Internet address of the additional information displayed on a window of a display unit 15 is selected afterward, access is made to the information providing site.

That is, access is made to the information providing site on the Internet through a radio unit 12 by operation of the user. At this time, the address information detection unit 11c detects the Internet address of the currently accessed information providing site (address detection processing). At this time, a content (ringing tone) is downloaded by operation of the user. The downloaded content (ringing tone) is stored as the music data 13m in the memory unit 13A.

In correspondence with the stored ringing tone, the Internet address of the information providing site is stored as the information providing site address 13r in the memory unit 13A, together with the date information 13p and music size information 13q. The stored information providing site address 13r is stored as a shortcut for accessing the information providing side (storage processing).

Subsequently, as shown in Fig. 8, the ringing tone selection menu is opened by operation of the user, and a ringing tone is selected by setting the cursor to the ringing tone downloaded from an information providing site in the past to which access is to be made.

When a ringing tone is selected, the submenu of this ringing tone is activated and displayed on the display unit 15, as shown in Fig. 9. When "melody information" is selected by operation of the user, the additional information (format and music size) of a content containing an Internet address ("URL") is read out from the memory unit 13A and displayed as a shortcut on the display unit 15 (display processing), as shown in Fig. 10.

When a shortcut corresponding to a displayed Internet address (URL) is selected, access is made to an information providing site corresponding to the Internet address (access processing), and "free ringing melody site" is displayed, as shown in, for example, Fig. 11.

As described above, in the second embodiment, when a content (ringing tone) is downloaded from an information providing site, the Internet address (URL) of the information providing site is detected and stored as part of the additional information (melody information 13n) of the ringing tone in correspondence with the ringing tone. Thereafter, when a shortcut corresponding to the Internet address of the additional information displayed on a window of the display unit 15 is selected, access is made to the information providing site. Even if, therefore, the user forgets the site name and address of this information providing site when he/she tries to download the same content (ringing tone) from the same information providing site after a lapse of several years, he/she can easily access the information providing site, which he/she accessed in the past to receive a content, by selecting the above shortcut. This makes it possible to save unnecessary search operation.

The embodiments of the present invention have been described in detail above with reference to the accompanying drawings. However, the specific arrangement of the present invention is not limited to those of the embodiments. The present invention incorporates changes in design and the like within the spirit and scope of the invention.

For example, contents distributed from information providing sites are not limited to standby images and ringing tones, and may include other kinds of image data and sound data.

The present invention can be effectively used when a user wants to have a self-tailored cellular phone whose specifications change every day.

According to the arrangement of the present invention, when a content is downloaded from an information providing site, the Internet address of the information providing site is detected and stored as part of the additional information of the image in correspondence with the image. Thereafter, when a shortcut corresponding to the Internet address of the additional information displayed on the display means is selected, access is made to the information providing site. Even if, therefore, the user forgets the site name and address of this information providing site when he/she tries to download the same content from the same information providing site after a lapse of several years, he/she can easily access the information providing site, which he/she accessed in the past to receive a content, by selecting the above shortcut. This makes it possible to save unnecessary search operation.

In summary an embodiment of the invention can be described as follows: a cellular phone includes an arrangement in which when a content is downloaded from an information providing site on the Internet, the Internet address of the information providing site is detected and stored as part of additional information of the content in correspondence with the content, so that when the Internet address of the additional information displayed on a window is selected afterward, access is made to the information providing site. An information providing site access method used for the cellular phone, and access control method are also disclosed.

## Claims

1. A cellular phone **characterized by** comprising an arrangement (13, 13f) in which when a content is downloaded from an information providing site on the Internet, an Internet address of the information providing site is detected and stored as part of additional information of the content in correspondence with the content, so that when the Internet address of the additional information displayed on a window is selected afterward, access is made to the information providing site.

2. A phone according to claim 1, further comprising:
address detection means (11c) for detecting the Internet address of the information providing site when the content is downloaded;
storage means (13, 13c, 13b, 13d, 13e, 13f, 13A, 13k, 13m, 13p, 13q, 13r) for storing the downloaded content and also storing the Internet address detected by said address detection means as part of the additional information of the content in correspondence with the content;
display means (15) for displaying the additional information of the content which contains the Internet address as a shortcut; and
control means (11, 11a, 11b) for accessing the information providing site corresponding to the Internet address when the shortcut corresponding to the Internet address displayed on said display means is selected.

3. A phone according to claim 1 or 2, wherein the content comprises an image or a ringing tone.

4. An information providing site access method **characterized by** comprising:
when a content is downloaded from an information providing site on the Internet, detecting an Internet address of the information providing site and storing the Internet address as part of additional information of the content in correspondence with the content (A5); and
when the Internet address of the additional information displayed on a window is selected afterward, making access to the information providing site.

5. A method according to claim 4, further comprising:
an address detection process (A2) of detecting the Internet address of the information providing site when the content is downloaded;
a storage process (A5) of storing the downloaded content and also storing the Internet address detected in the address detection process as part of the additional information of the content in correspondence with the content;
a display process (Figs. 3, 4, 5, 8, 9) of displaying the additional information of the content which contains the Internet address as a shortcut; and
an access process (Figs. 6, 11) of accessing the information providing site corresponding to the Internet address when the shortcut corresponding to the displayed Internet address is selected.

6. A method according to claim 4 or 5, wherein the content comprises an image or a ringing tone.

7. An access control program for controlling a cellular phone, **characterized by** using a computer and comprising:
a storage step (A5) of, when a content is downloaded from an information providing site on the Internet, detecting an Internet address of the information providing site and storing the Internet address as part of additional information of the content in correspondence with the content; and
a step (Figs. 6, 11) of, when the Internet address of the additional information displayed on a window is selected afterward, making access to the information providing site.
